# EUROPÄISCHE PATENTSCHRIFT

(11) **EP 2 548 358 B1**
(45) Veröffentlichungstag und Bekanntmachung des Hinweises auf die Patenterteilung: **15.08.2018**
(21) Anmeldenummer: 11717564.6
(22) Anmeldetag: 26.04.2011
(51) Int. Cl.: H04L 29/06, H04W 12/06

(54) **VERFAHREN ZUR DYNAMISCHEN AUTORISIERUNG EINES MOBILEN KOMMUNIKATIONSGERÄTES**
METHOD FOR DYNAMICALLY AUTHORIZING A MOBILE COMMUNICATION DEVICE
MÉTHODE D'AUTORISATION DYNAMIQUE D'UN DISPOSITIF DE COMMUNICATION MOBILE

(30) Priorität: 21.05.2010 DE 102010021256
(43) Veröffentlichungstag der Anmeldung: 23.01.2013
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2011/056561
(87) Internationale Veröffentlichungsnummer: WO 2011/144419

(56) Entgegenhaltungen:
- WO-A1-2009/127984
- WO-A2-2008/067332
- US-A1- 2006 168 647

## Beschreibung

Die vorliegende Erfindung betrifft ein Verfahren, ein System und ein Authentisierungsmodul zur dynamischen Autorisierung eines mobilen Kommunikationsgerätes für ein Netzwerk. Insbesondere sind hierbei mobile Wartungsgeräte zu verstehen, welchen ein Zugang zu Netzwerken von zu wartenden Anlagen ermöglicht wird.

Technische Einrichtungen erfordern in regelmäßigen Abständen oder bei fehlerhafter Funktionsweise Wartungsarbeiten. Hierbei kommen üblicherweise mobile Wartungsgeräte, wie Notebooks oder PDAs (Personal Digital Assistant) zum Einsatz, die über eine dezentral zugängliche Schnittstelle Wartungszugang zu einem bestimmten Industriegerät, wie beispielsweise einem Zug, einem Stellwerk, einer Fertigungssteuerung oder einem Medizingerät erhalten. Die Verbindung mit der dezentral zugänglichen Schnittstelle erfolgt drahtgebunden oder drahtlos. Über den Wartungszugang können Diagnosefunktionen aufgerufen, Fehlerspeicher ausgelesen, Konfigurationseinstellungen der Industrieanlage modifiziert oder Softwareupdates eingespielt werden.

Um einen Missbrauch an diesen sensiblen Kommunikationsschnittstellen zu verhindern, muss sicher gestellt werden, dass ein Wartungszugang nur berechtigten mobilen Wartungsgeräten erlaubt wird.

Zur Gewährung von Zugriffsrechten wird daher üblicherweise eine Authentizitätsprüfung vorgenommen, bei der der Nachweis einer behaupteten Identität und damit die Berechtigung zum Zugriff auf die jeweilige Wartungsschnittstelle überprüft wird. Ist die Authentizitätsprüfung erfolgreich, werden dem jeweiligen Nutzer die vorher eingeräumten Zugriffsrechte gewährt.

Die meisten bekannten Authentisierungsverfahren beruhen darauf, dass die zu authentisierende Instanz gegenüber einer Prüfinstanz zu beweisen hat, dass sie im Besitz eines Geheimnisses und/oder eines Gegenstandes ist. Das bekannteste Authentisierungsverfahren ist die Übertragung eines Passwortes, bei dem die authentisierende Instanz ein geheimes Passwort direkt an eine Prüfinstanz überträgt. Die Prüfinstanz beziehungsweise die Authentisierungsprüfeinheit überprüft dann die Richtigkeit des übertragenen Passwortes.

Eine weitere bekannte Möglichkeit zur Verhinderung von Missbrauch von Wartungszugängen ist, die jeweiligen Netzwerkbuchsen für den Wartungszugang in einem physikalisch zugangsgeschützten Bereich vorzusehen. Beispielsweise kann die Netzwerkbuchse mit einer verschließbaren Wartungsklappe gesichert sein oder sich in einem verschließbaren Raum befinden. Ein solches Vorgehen erfordert eine große Anzahl von Wartungsschnittstellen, vor allem in räumlich verteilten Anlagen.

Die WO 2008/067332 A2 offenbart ein Verfahren zur Autorisierung über ein Netzwerk eines mobilen Kommunikationsendgerätes gegenüber einem Dienstanbieter. Dabei empfängt der Dienstanbieter vor der Lieferung des Dienstes eine Zustimmung einer Autorisierungseinrichtung des Verbrauchers über ein zweites Netzwerk.

In der WO 2009/127984 wird ein Verfahren offenbart, um zwischen einem Benutzerrechner und einem Server eine authentifizierte Verbindung über ein Datennetzwerk bereitzustellen. Nach der Anforderung einer Verbindung zwischen dem Benutzerrechner und Server sendet der Server über den Benutzerrechner eine Authentisierungsnachricht, die von dort an eine Sicherheitskomponente in ein Mobilfunkgerät übertragen wird. Eine Kamera im Mobilfunkgerät kann verwendet werden, um beispielsweise eine Authentisierungsnachricht, die auf dem Rechner abgebildet ist, aufzunehmen. Diese Information wird dann unter Umgehung des Benutzerrechners direkt an den Authentisierungsserver geschickt.

Bei der Überwachung von Wartungszugängen in großen Anlagen ziehen solche Verfahren also einen erheblichen administrativen Aufwand nach sich, der beispielsweise durch die Ausgabe von Passwörtern oder mechanischen Schlüsseln entsteht. Das mechanische Verschließen von Kommunikationsschnittstellen ist zudem nur bei drahtgebundenen Zugängen möglich, während bei drahtlosen Zugängen ein solches Verfahren nicht einsetzbar ist. Bei drahtlosen Wartungszugängen besteht also nur die Möglichkeit durch die Vergabe von Wartungspasswörtern die jeweiligen Kommunikationsschnittstellen zu schützen. Insbesondere beim temporären Einsatz von Wartungstechnikern oder freien Mitarbeitern sollten die jeweiligen Wartungspasswörter nach Beendigung der Wartungsaufgabe auf dem zu wartenden System wieder geändert werden, was wiederum zu einem erhöhten konfigurativen Aufwand bei der Anwendung dieses Verfahrens führt.

US 2006/0168647 A1 beschreibt ein Verfahren, bei dem ein erstes Gerät automatisch autorisiert wird, Zugang zu einem sicheren Netzwerk zu erlangen. Dazu wird dem ersten Gerät eine Netzzugangsinformation, die maschinenlesbar ist, zugeordnet. Diese Netzzugangsinformation wird einem Leser zugeführt, der mit einem zweiten Gerät des sicheren Netzwerks verbunden ist. Durch die Zuführung der Netzzugangsinformation, beispielsweise in Form eines RFID Chips, zum Leser, hier ein RFID-Lesegerät, wird das erste Gerät zum Zugang zum sicheren Netzwerk durch das zweite Gerät autorisiert. Dadurch wird ein Administrations- und Konfigurationsaufwand insbesondere für Nutzer von ersten Geräten mit geringer technischer Expertise vereinfacht und somit ein Einbinden neuer Geräte in ein sicheres Netzwerk vereinfacht.

Die Aufgabe der vorliegenden Erfindung ist es demnach, ein Verfahren zur temporären Autorisierung von Netzwerkzugängen zu schaffen, welches einen geringen Administrations- und Konfigurationsaufwand darstellt und gleichzeitig eine zeitliche Beschränkung der Autorisierung ermöglicht. Diese Aufgabe wird durch ein Verfahren, ein System und ein Authentisierungsmodul mit den Merkmalen der Ansprüche 1, 5 und 9 gelöst. Vorteilhafte Weiterbildungen der Erfindung sind in den abhängigen Ansprüchen angegeben.

In dem erfindungsgemäßen Verfahren zur dynamischen Autorisierung eines mobilen Kommunikationsgerätes für ein Netzwerk wird ein dem mobilen Kommunikationsgerät zugeordnetes Authentisierungsmodul über eine physikalisch zugangsgeschützte Kommunikationsschnittstelle mit dem Netzwerk verbunden. Das mobile Kommunikationsgerät übermittelt über eine weitere drahtlose oder drahtgebundene Kommunikationsschnittstelle eine Zugangsanfrage an das Netzwerk. Einer Authentisierungsprüfeinheit des Netzwerks wird von dem Authentisierungsmodul eine Sicherheitsprüfinformation des mobilen Kommunikationsgerätes bereitgestellt. Die Authentisierungsprüfeinheit autorisiert anhand der Zugangsanfrage und der Sicherheitsprüfinformation das mobile Kommunikationsgerät für das Netzwerk.

Ein grundlegender Aspekt der vorliegenden Erfindung ist, einen physikalisch zugangsgeschützten Wartungszugang, wie beispielsweise eine Wartungsklappe mit mechanischem Schloss, zu verwenden, um die sichere Einrichtung der für die logische Zugriffssicherheit auf zumindest eine Wartungsfunktion über zumindest eine weitere dezentrale Wartungsschnittstelle benötigten Sicherheitsprüfinformation zu gewährleisten. Hierzu wird nicht das mobile Wartungsgerät selbst mit der physikalisch zugangsgeschützten Kommunikationsschnittstelle verbunden, sondern ein zweites, dem mobilen Wartungsgerät zugeordnetes Authentisierungsmodul. Über dieses Authentisierungsmodul werden Sicherheitsprüfinformationen für den sicheren Wartungszugang zum Netzwerk über weitere, dezentrale Kommunikationsschnittstellen des Netzwerks bereitgestellt. Der Zugang kann hierbei direkt mit dem Netzwerk und/oder mit einer Komponente des Netzwerks, beispielsweise einem Steuerrechner, erfolgen.

In einer Weiterbildung der vorliegenden Erfindung sind die Sicherheitsprüfinformationen Konfigurationsdaten für das Einrichten einer sicheren Netzwerkverbindung des mobilen Kommunikationsgerätes. Diese Konfigurationsdaten umfassen beispielsweise eine Identifizierungsinformation des mobilen Kommunikationsgerätes, wie beispielsweise eine Seriennummer, eine Netzwerkadresse des Netzwerkadapters oder ein dem mobilen Kommunikationsgerät zugeordneter Schlüssel. Nachdem dem Netzwerk durch das Authentisierungsmodul auf diese Weise die Identität des mobilen Kommunikationsgerätes bekannt gemacht wurde, wird dem mobilen Kommunikationsgerät hiernach ein Zugang zu den weiteren Kommunikationsschnittstellen des Netzwerks nach Mitteilung seiner Identität gewährt. Somit verwendet das mobile Kommunikationsgerät die Sicherheitskonfigurationsdaten zur Authentifizierung gegenüber dem Netzwerk, welche bereits durch das Authentisierungsmodul dem Netzwerk bereitgestellt wurden. Das Netzwerk überprüft hierbei die von dem Authentisierungsmodul bereitgestellten Sicherheitskonfigurationsdaten und die vom mobilen Kommunikationsgerät übermittelten Sicherheitskonfigurationsdaten.

In einer Weiterbildung der vorliegenden Erfindung sind die Sicherheitsprüfinformationen eine Authentisierungsfunktionalität für das Einrichten einer sicheren Netzwerkverbindung des mobilen Kommunikationsgerätes. Hierbei wird ein Prüfkommando durch die Authentisierungsprüfeinheit an das Authentisierungsmodul übermittelt. Eine Prüfantwort wird anhand des Prüfkommandos durch das Authentisierungsmodul ermittelt und die Prüfantwort durch da Authentisierungsmodul an die Authentisierungsprüfeinheit übermittelt. Die Prüfantwort wird schließlich durch die Authentisierungsprüfeinheit überprüft.

In dieser Weiterbildung der vorliegenden Erfindung werden durch das Authentisierungsmodul nicht nur Sicherheitskonfigurationsdaten bereitgestellt, sondern das Authentisierungsmodul übernimmt in einem Challenge-Response-Verfahren für das mobile Kommunikationsgerät die Authentifizierung gegenüber dem Netzwerk. Aus Sicht des mobilen Kommunikationsgerätes arbeitet das Netzwerk in diesem Fall als Authentisierungsproxy und das Authentisierungsmodul als Authentisierungsserver. Das Challenge-Response-Verfahren zur Authentizitätsüberprüfung kann hierbei auf symmetrischer oder asymmetrischer Kryptographie basieren.

Das erfindungsgemäße System zur dynamischen Autorisierung eines mobilen Kommunikationsgerätes für ein Netzwerk durch eine Authentisierungsprüfeinheit des Netzwerks weist ein dem mobilen Kommunikationsgerät zugeordnetes Authentisierungsmodul auf, welches über eine physikalische zugangsgeschützte Kommunikationsschnittstelle mit dem Netzwerk verbindbar ist. Das mobile Kommunikationsgerät selbst ist über weitere drahtlose oder drahtgebundene Kommunikationsschnittstellen mit dem Netzwerk verbindbar. Das Authentisierungsmodul weist Mittel zur Bereitstellung von Sicherheitsprüfinformationen des mobilen Kommunikationsgerätes auf, anhand derer eine Autorisierung des mobilen Kommunikationsgerätes durch die Authentisierungsprüfeinheit des Netzwerks erfolgt. Das erfindungsgemäße Authentisierungsmodul ist eingerichtet zum Durchführen des erfindungsgemäßen Verfahrens.

Im Folgenden wird die Erfindung mit Ausführungsbeispielen anhand der beigelegten Figuren näher erläutert. Es zeigen:
- Figur 1: in einer schematischen Darstellung ein erfindungsgemäßes System zur dynamischen Autorisierung von Wartungszugängen am Beispiel eines Zugwaggons,
- Figur 2: in einer schematischen Darstellung ein Ablaufdiagramm des erfindungsgemäßen Verfahrens zur dynamischen Autorisierung von Wartungszugängen.

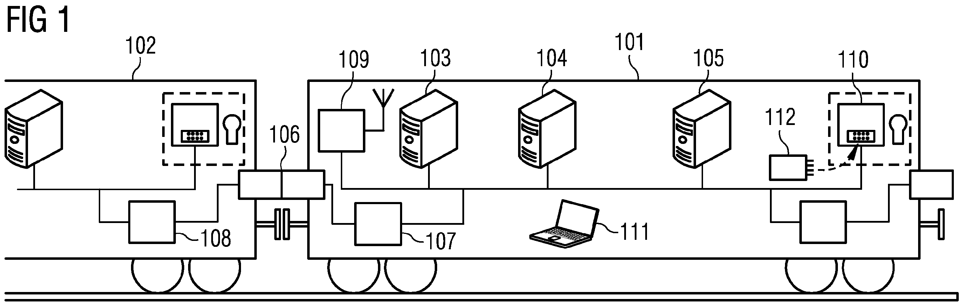

Die Figur 1 zeigt einen ersten und einen zweiten Zugwaggon 101, 102, deren Steuergeräte jeweils schematisch dargestellt sind. Zu sehen ist ein Zugkontrollsystem 103, ein Passagierinfotainmentsystem 104 und ein Zugwartungssystem 105, welche untereinander über ein Netzwerk verbunden sind. Über Elektrokopplungen 106 ist das Netzwerk der einzelnen Zugwaggons 101, 102 miteinander gekoppelt. Weiterhin sind Gateways 107, 108 dargestellt, über die die Netzwerkkommunikation zwischen den einzelnen Zugwaggons geleitet wird. Auf das Netzwerk kann von außen drahtlos oder drahtgebunden zugegriffen werden. Gezeigt ist ein drahtloser Zugang 109 als Wireless LAN Access Point und ein drahtgebundener Zugang 110.

Damit nun ein mobiles Wartungsgerät 111 auf den drahtlosen Zugangspunkt zugreifen kann und damit Zugriff zum Wartungsnetz des Zuges erhält, wird ein dem mobilen Wartungsgerät zugeordnetes Authentisierungsmodul 112 in einem Wartungszugang 110 eingesetzt. Der Wartungszugang 110 ist hinter einer verschließbaren Wartungsklappe angebracht, so dass dieser nur mit Hilfe des passenden mechanischen Schlüssels zugänglich ist.

Auf diese Weise wird ein dezentraler Wartungszugang zu einzelnen Steuergeräten autorisiert, mit denen das mobile Wartungsgerät 111 drahtlos über den Access Point 109 verbunden wird oder mit denen es direkt über eine Kabelverbindung verbunden wird (nicht dargestellt).

Zudem kann das mobile Wartungsgerät Zugriff auf Wartungsfunktionen eines verbundenen Zugteils 102 erhalten. Es muss dazu nicht das Authentisierungsmodul 112 in den anderen Zugwagon umgesteckt werden. Das Verfahren ist somit auch anwendbar, wenn der weitere Zugwagon nicht über einen eigenen Wartungszugang für das Authentisierungsmodul 112 verfügt. Es genügt, wenn nur in einem Zugwagon ein solcher Wartungszugang vorgesehen ist.

Im Folgenden werden mögliche technische Realisierungen zur dynamischen Autorisierung eines mobilen Kommunikationsgerätes mit Hilfe eines Authentisierungsmoduls für ein Netzwerk beschrieben.

Nachdem das dem mobilen Kommunikationsgerät 111 zugeordnete Authentisierungsmodul 112 über eine physikalisch zugangsgeschützte Kommunikationsschnittstelle 110 mit dem Netzwerk verbunden ist, übermittelt das mobile Kommunikationsgerät 111 über eine weitere drahtlose Kommunikationsschnittstelle 109 eine Zugangsanfrage an das Netzwerk. Daraufhin überprüft die Authentisierungsprüfeinheit des Netzwerks (nicht dargestellt) einen vorgebbaren Netzwerkzugang (hier 110) auf das Vorhandensein eines angeschlossenen Authentisierungsmoduls 112.

In dieser Ausgestaltung der vorliegenden Erfindung überprüft die Authentisierungsprüfeinheit des Netzwerks nach einer empfangenen Zugangsanfrage eines mobilen Kommunikationsgerätes einen vorgebbaren Netzwerkzugang (Port XY) auf das Vorhandensein eines angeschlossenen Authentisierungsmoduls ab. In einer alternativen Ausgestaltung überprüft die Authentisierungsprüfeinheit des Netzwerks beispielsweise regelmäßig einen vorgebbaren Netzwerkzugang (Port XY), ob dort ein Authentisierungsmodul angeschlossen wurde. In einer weiteren Ausgestaltung überprüft die Authentisierungsprüfeinheit des Netzwerks mehrere vorgebbare Netzwerkzugänge auf das Vorhandensein eines angeschlossenen Authentisierungsmoduls.

Das angesprochene Authentisierungsmodul 112 stellt der Authentisierungsprüfeinheit des Netzwerks sodann eine Sicherheitsprüfinformation des mobilen Kommunikationsgerätes bereit.
In einer Ausgestaltung der vorliegenden Erfindung sind die Sicherheitsprüfinformationen Konfigurationsdaten für das Einrichten einer sicheren Netzwerkverbindung des mobilen Kommunikationsgerätes. Diese Konfigurationsdaten umfassen beispielsweise eine Identifizierungsinformation des mobilen Kommunikationsgerätes, wie eine Seriennummer, eine Netzwerkadresse des Netzwerkadapters oder ein dem mobilen Kommunikationsgerät zugeordneter Schlüssel.

In einer alternativen Ausgestaltung der vorliegenden Erfindung sind die Sicherheitsprüfinformationen eine Authentisierungsfunktionalität für das Einrichten einer sicheren Netzwerkverbindung des mobilen Kommunikationsgerätes. Hierbei wird ein Prüfkommando durch die Authentisierungsprüfeinheit an das Authentisierungsmodul 112 übermittelt. Eine Prüfantwort wird anhand des Prüfkommandos durch das Authentisierungsmodul 112 ermittelt und die Prüfantwort durch das Authentisierungsmodul 112 an die Authentisierungsprüfeinheit übermittelt. Die Prüfantwort wird schließlich durch die Authentisierungsprüfeinheit überprüft.

In dieser Ausgestaltung der vorliegenden Erfindung werden durch das Authentisierungsmodul 112 nicht nur Sicherheitskonfigurationsdaten bereitgestellt, sondern das Authentisierungsmodul übernimmt in einem Challenge-Response-Verfahren für das mobile Kommunikationsgerät 111 die Authentifizierung gegenüber dem Netzwerk. Aus Sicht des mobilen Kommunikationsgerätes arbeitet das Netzwerk in diesem Fall als Authentisierungsproxy und das Authentisierungsmodul 112 als Authentisierungsserver. Das Challenge-Response-Verfahren zur Authentizitätsüberprüfung kann hierbei auf symmetrischer oder asymmetrischer Kryptographie basieren. Es kann beispielsweise mittels eines EAP-Protokolls (Extensible Authentication Protocol) oder gemäß eines Vierwege-Handshakes (4-Way Handshake) nach IEEE 802.11 realisiert sein.

Die Authentisierungsprüfeinheit autorisiert schließlich anhand der Zugangsanfrage und der Sicherheitsprüfinformation das mobile Kommunikationsgerät 111 für das Netzwerk.

Nachdem dem Netzwerk durch das Authentisierungsmodul also die Identität des mobilen Kommunikationsgerätes bekannt gemacht wurde, wird dem mobilen Kommunikationsgerät hiernach ein Zugang zu den weiteren Kommunikationsschnittstellen des Netzwerks nach Mitteilung seiner Identität gewährt.

In einer Ausgestaltung der vorliegenden Erfindung bleibt ein gewährter Wartungszugang gültig, solange das Authentisierungsmodul eingesteckt ist. In einer weiteren Ausgestaltung der vorliegenden Erfindung bleibt ein gewährter Wartungszugang für einen vorgebbaren Zeitraum gültig, unabhängig davon, ob das Authentisierungsmodul eingesteckt ist oder nicht.

Solange einem mobilen Kommunikationsgerät ein Wartungszugang gewährt ist, kann es wiederholt Wartungszugang erhalten. So kann es nach einem Verbindungsabbruch oder bei einem Wechsel zu einer anderen Kommunikationsschnittstelle des Netzwerks erneut Zugang zum Netzwerk erhalten.

Ein bereits bestehender Wartungszugang eines mobilen Kommunikationsgerätes kann beendet werden, wenn der dem mobilen Kommunikationsgerät gewährter Wartungszugang nicht mehr gültig ist, z.B. wenn das dem mobilen Kommunikationsgerät zugeordnete Autorisierungsmodul vom Netzwerk getrennt wird. In einer Variante bleibt ein bereits bestehender Wartungszugang weiterhin bestehen, auch wenn der dem mobilen Kommunikationsgerät gewährter Wartungszugang nicht mehr gültig ist. Es kann dann jedoch nicht erneut einen Wartungszugang, z.B. an einer anderen Kommunikationsschnittstelle des Netzwerks erhalten.

In einer Ausgestaltung der vorliegenden Erfindung wird eine Warnmeldung erzeugt, wenn eine Verbindung zwischen mobilem Wartungsgerät und Authentisierungsmodul für eine gewisse Dauer nicht bestanden hat oder die Autorisierung wieder deaktiviert wurde.

In einer weiteren Variante erfolgt eine Deaktivierung der Zugangsberechtigung, wenn der Zugang während einer vorgebbaren Zeitdauer nicht genutzt wurde.

In einer Ausgestaltung der vorliegenden Erfindung ist ein mobiles Wartungsgerät einem bestimmten Authentisierungsmodul fest zugeordnet. In einer Variante erfolgt die veränderliche Bindung des Authentisierungsmoduls an ein bestimmtes mobiles Wartungsgerät, indem es mit dem mobilen Wartungsgerät verbunden wird.

Durch das beschriebene Verfahren wird ein dem Authentisierungsmodul zuordenbares mobiles Wartungsgerät temporär für den Wartungszugang einer bestimmten Industrieanlage autorisiert. Das somit autorisierte mobile Wartungsgerät kann auf weitere, insbesondere drahtlose Wartungsschnittstellen der Industrieanlage zugreifen. Dabei verwendet es beispielsweise Sicherheitskonfigurationsdaten zur Authentifizierung gegenüber der Industrieanlage, welche durch die Industrieanlage unter Verwendung der mittels des Authentisierungsmoduls eingerichteten Sicherheitskonfigurationsdaten überprüft werden.

Es wird eine temporäre Bindung eingerichtet, wobei als Sicherheitsmerkmal ein physikalischer Zugangsschutz verwendet wird. Diese temporäre Bindung ermöglicht den geschützten Wartungszugang zu dieser Industrieanlage durch dieses gebundene mobile Wartungsgerät, wobei dafür weitere Schnittstellen verwendet werden können, die nicht durch den für das Einrichten der Bindung verwendeten Zugangsschutz verwendet wurden. So wird der physikalische Zugangsschutz genutzt, um einen davon unabhängigen logischen Zugangsschutz einzurichten.

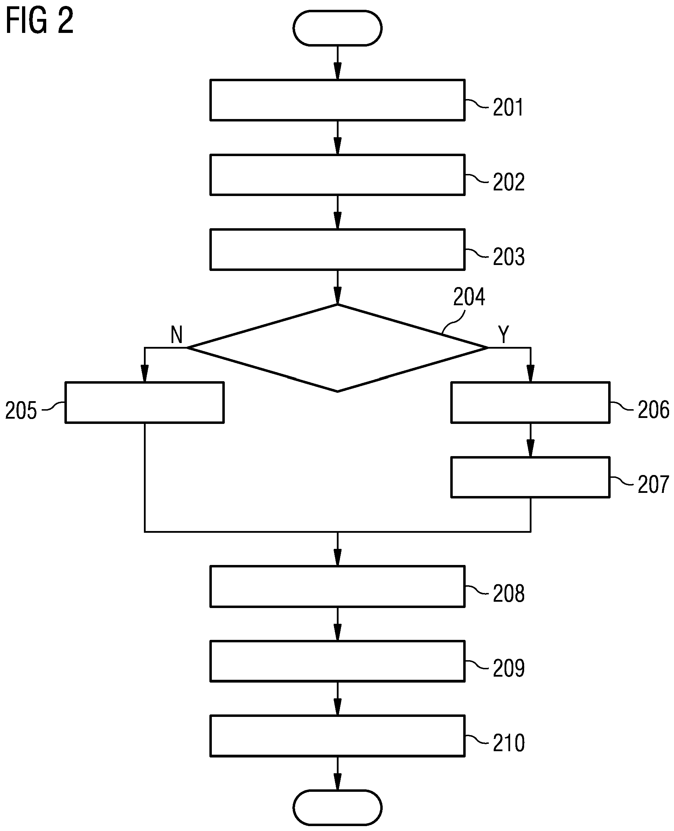

Die Figur 2 zeigt in einer schematischen Darstellung ein Ablaufdiagramm des erfindungsgemäßen Verfahrens zur dynamischen Autorisierung eines Netzwerkzugangs. Zunächst wird die Wartungsklappe einer Industrieanlage geöffnet 201. Hiernach wird das Authentisierungsmodul eingesteckt. Anschließend wird das mobile Wartungsgerät mit einer Wartungsschnittstelle drahtlos oder drahtgebunden verbunden 203. Hiernach wird überprüft, ob das eingesteckte Authentisierungsmodul dem mobilen Wartungsgerät zugeordnet ist und über eine Wartungsberechtigung verfügt 204. Ist dies nicht der Fall, wird der Wartungszugang blockiert 205. Ist das eingesteckte Authentisierungsmodul dem mobilen Wartungsgerät zuordenbar und verfügt das mobile Wartungsgerät über eine Wartungsberechtigung, wird der Wartungszugang gewährt 206 und die Wartungsaufgabe kann durchgeführt werden 207. Anschließend wird das Wartungsgerät von der Wartungsschnittstelle getrennt 208. Hiernach kann das Authentisierungsmodul ebenfalls entfernt werden 209. Schließlich wird die Wartungsklappe wieder mechanisch verschlossen 210.

Die Grundidee der Erfindung ist auch auf andere mobile Kommunikationsgeräte übertragbar, wie beispielsweise das Telefon eines Zugbegleiters oder das Gerät zum Prüfen von Fahrkarten, die dynamisch mit dem jeweiligen Netzwerk verbunden werden.

Es wird eine vorhandene physikalische Zugangssicherung verwendet, um eine logische Zugriffssicherung auf Wartungsfunktionen einzurichten, die von der physikalischen Zugangssicherung nicht abgedeckt werden. Somit wird der administrative Aufwand zum Verwalten von logischen Sicherheitsinformationen verringert beziehungsweise vermieden.

Der Wartungszugang ist nicht, wie heute üblich, nur über den physikalisch geschützten Wartungszugang möglich, sondern es kann das Wartungsgerät dezentral mitgeführt werden, um auch räumlich unabhängiger, beispielsweise über WLAN, auf die Industrieanlage zugreifen zu können. Insbesondere bei einem mit WLAN ausgestatteten Zug muss nur hinter der Wartungsklappe das Authentisierungsmodul eingesteckt werden, um darauf im gesamten Zug über WLAN auf Zugwartungsfunktionen zugreifen zu können. Es wird somit eine extrem einfach handhabbare Möglichkeit geschaffen, um einem bestimmten mobilen Wartungsgerät den Zugang zu Wartungsfunktionen zu ermöglichen.

## Patentansprüche

1. Verfahren zur dynamischen Autorisierung eines mobilen Kommunikationsgerätes (111) für ein Netzwerk, bei dem
- ein dem mobilen Kommunikationsgerät (111) zugeordnetes Authentisierungsmodul (112) über eine physikalisch zugangsgeschützte Kommunikationsschnittstelle (110) mit dem Netzwerk verbunden wird,
- das mobile Kommunikationsgerät (111) über eine weitere drahtlose oder drahtgebundene Kommunikationsschnittstelle (109) eine Zugangsanfrage an das Netzwerk übermittelt,
- eine Authentisierungsprüfeinheit des Netzwerks von dem Authentisierungsmodul (112) eine Sicherheitsprüfinformation des mobilen Kommunikationsgerätes (111) bereitgestellt wird,
- die Authentisierungsprüfeinheit anhand der Zugangsanfrage und der Sicherheitsprüfinformation das mobile Kommunikationsgerät (111) für das Netzwerk autorisiert,
- ein dem mobilen Kommunikationsgerät (111) gewährter Zugang beendet wird, wenn das Authentisierungsmodul (112) vom Netzwerk getrennt wird oder der Zugang während einer vorgebbaren Zeitdauer nicht genutzt wurde oder ein vorgebbarer Gültigkeitszeitraum für den Zugang abgelaufen ist
und
- das mobile Kommunikationsgerät einen gewährten Zugang wiederholt erhalten kann.

2. Verfahren nach Anspruch 1, wobei
die Sicherheitsprüfinformationen Konfigurationsdaten für das Einrichten einer sicheren Netzwerkverbindung des mobilen Kommunikationsgerätes (111) sind.

3. Verfahren nach Anspruch 2, wobei
die Konfigurationsdaten für das Einrichten einer sicheren Netzwerkverbindung einer Identifizierungsinformation des mobilen Kommunikationsgerätes (111) und/oder eine symmetrische oder asymmetrische Schlüsselinformation umfassen.

4. Verfahren nach Anspruch 1, wobei
die Sicherheitsprüfinformationen eine Authentisierungsfunktionalität für das Einrichten einer sicheren Netzwerkverbindung des mobilen Kommunikationsgerätes (111) sind, derart ausgestaltet, dass
- ein Prüfkommando durch die Authentisierungsprüfeinheit an das Authentisierungsmodul (112) übermittelt wird,
- eine Prüfantwort anhand des Prüfkommandos durch das Authentisierungsmodul (112) ermittelt und die Prüfantwort durch das Authentisierungsmodul (112) an die Authentisierungsprüfeinheit übermittelt wird,
- die Prüfantwort durch die Authentisierungsprüfeinheit überprüft wird.

5. System zur dynamischen Autorisierung eines mobilen Kommunikationsgerätes (111) für ein Netzwerk durch eine Authentisierungsprüfeinheit des Netzwerks, mit
- einem dem mobilen Kommunikationsgerät (111) zugeordneten Authentisierungsmodul(112), welches über eine physikalisch zugangsgeschützte Kommunikationsschnittstelle (110) mit dem Netzwerk verbindbar ist,
- dem mobilen Kommunikationsgerät(111), welches über weitere drahtlose oder drahtgebundene Kommunikationsschnittstellen (109) mit dem Netzwerk verbindbar ist,
- wobei das Authentisierungsmodul (112) Mittel zur Bereitstellung von Sicherheitsprüfinformationen des mobilen Kommunikationsgerätes (111) aufweist, anhand derer eine Autorisierung des mobilen Kommunikationsgerätes (111) durch die Authentisierungseinheit des Netzwerks erfolgt, wobei
- ein dem mobilen Kommunikationsgerät (111) gewährter Zugang beendet wird, wenn das Authentisierungsmodul (112) vom Netzwerk getrennt wird oder der Zugang während einer vorgebbaren Zeitdauer nicht genutzt wurde oder ein vorgebbarer Gültigkeitszeitraum für den Zugang abgelaufen ist
und
- das mobile Kommunikationsgerät einen gewährten Zugang wiederholt erhalten kann.

6. System nach Anspruch 5, wobei
die Sicherheitsprüfinformationen Konfigurationsdaten für das Einrichten einer sicheren Netzwerkverbindung des mobilen Kommunikationsgerätes (111) sind.

7. System nach Anspruch 6, wobei
die Konfigurationsdaten für das Einrichten einer sicheren Netzwerkverbindung einer Identifizierungsinformation des mobilen Kommunikationsgerätes (111) und/oder eine symmetrische oder asymmetrische Schlüsselinformation umfassen.

8. System nach Anspruch 5, wobei
die Sicherheitsprüfinformationen eine Authentisierungsfunktionalität für das Einrichten einer sicheren Netzwerkverbindung des mobilen Kommunikationsgerätes (111) sind, und das Authentisierungsmodul (112) und die Authentisierungsprüfeinheit derart ausgestaltet sind, dass
- ein Prüfkommando durch die Authentisierungsprüfeinheit an das Authentisierungsmodul (112) übermittelbar ist,
- eine Prüfantwort anhand des Prüfkommandos durch da Authentisierungsmodul (112) ermittelbar und die Prüfantwort durch das Authentisierungsmodul (112) an die Authentisierungsprüfeinheit übermittelbar ist,
- die Prüfantwort durch die Authentisierungsprüfeinheit überprüfbar ist.

9. Authentisierungsmodul geeignet zum Durchführen eines Verfahrens nach den Ansprüchen 1 bis 4.

## Claims

1. Method for dynamic authorization of a mobile communications device (111) for a network, in which
- an authentication module (112) associated with the mobile communications device (111) is connected to the network via a physically access-protected communications interface (110),
- the mobile communications device (111) transfers an access request to the network via a further wireless or wired communications interface (109),
- an authentication check unit of the network is provided with security check information of the mobile communications device (111) by the authentication module (112),
- the authentication check unit authorizes the mobile communications device (111) for the network with the aid of the access request and the security check information,
- an access granted to the mobile communications device (111) is terminated if the authentication module (112) is separated from the network or the access has not been used during a predefinable duration or a predefinable validity period for the access has expired
and
- the mobile communications device can obtain granted access.

2. Method according to claim 1, wherein
the security check information is configuration data for setting up a secure network connection of the mobile communications device (111).

3. Method according to claim 2, wherein
the configuration data includes identification information of the mobile communications device (111) and/or a symmetrical or asymmetrical key information for setting up a secure network connection.

4. Method according to claim 1, wherein
the security check information is an authentication functionality for setting up a secure network connection of the mobile communications device (111), which is configured such that
- a check command is transferred by the authentication check unit to the authentication module (112),
- a check response is determined by the authentication module (112) with the aid of the check command and the check response is transferred to the authentication check unit by the authentication module (112),
- the check response is checked by the authentication check unit.

5. System for dynamic authorization of a mobile communications device (111) for a network by an authentication check unit of the network, having
- an authentication module (112) associated with the mobile communications device (111), which can be connected to the network via a physically access-protected communications interface (110),
- the mobile communications device (111), which can be connected to the network via further wireless or wired communications interfaces (109),
- wherein the authentication module (112) has means for providing security check information of the mobile communications device (111), with the aid of which the mobile communications device (111) is authorized by the authentication unit of the network wherein
- an access granted to the mobile communications device (111) is terminated if the authentication module (112) is separated from the network or the access has not been used during a predefinable duration or a predefinable validity period for the access has expired
and
- the mobile communications device can obtain granted access.

6. System according to claim 5,
wherein the security check information is configuration data for setting up a secure network connection of the mobile communications device (111).

7. System according to claim 6, wherein
the configuration data includes identification information of the mobile communications device (111) and/or a symmetrical or asymmetrical key information for setting up a secure network connection.

8. System according to claim 5,
wherein the security check information is an authentication functionality for setting up a secure network connection of the mobile communications device (111), and the authentication module (112) and the authentication check unit are embodied such that
- a check command can be transferred to the authentication module (112) by the authentication check unit,
- a check response can be determined by the authentication module (112) with the aid of the check command and the check response can be transferred to the authentication check unit by the authentication module (112),
- the check response can be checked by the authentication check unit.

9. Authentication module suitable for implementing a method according to claims 1 to 4.

## Revendications

1. Procédé d'autorisation dynamique d'un appareil de communication mobile (111) pour un réseau, dans lequel :
- un module d'authentification (112) associé à l'appareil de communication mobile (111) est relié au réseau via une interface de communication (110) protégée physiquement en accès ;
- l'appareil de communication mobile (111) transmet une requête d'accès au réseau via une autre interface de communication (109) sans fil ou filaire ;
- une information de contrôle de sécurité de l'appareil de communication mobile (111) est fournie par le module d'authentification (112) via une unité de contrôle d'authentification du réseau ;
- l'unité de contrôle d'authentification autorise l'appareil de communication mobile (111) pour le réseau à l'aide de la requête d'accès et de l'information de contrôle de sécurité ;
- un accès octroyé à l'appareil de communication mobile (111) est terminé lorsque le module d'authentification (112) est coupé du réseau ou l'accès n'a pas été utilisé pendant une durée de temps prédéterminable ou une durée de validité prédéterminable de l'accès a expiré ; et
- l'appareil de communication mobile peut recevoir de manière répétée un accès octroyé.

2. Procédé selon la revendication 1, les informations de contrôle de sécurité étant des données de configuration pour l'établissement d'une liaison réseau sécurisée de l'appareil de communication mobile (111).

3. Procédé selon la revendication 2, les données de configuration pour l'établissement d'une liaison réseau sécurisée comprenant une information d'identification de l'appareil de communication mobile (111) et/ou une information de clé symétrique ou asymétrique.

4. Procédé selon la revendication 1, les informations de contrôle de sécurité étant une fonctionnalité d'authentification pour l'établissement d'une liaison réseau sécurisée de l'appareil de communication mobile (111), conçu de manière telle que :
- une commande de contrôle est transmise par l'unité de contrôle d'authentification au module d'authentification (112) ;
- une réponse de contrôle est déterminée à l'aide de la commande de contrôle par le module d'authentification (112) et la réponse de contrôle est transmise par le module d'authentification (112) à l'unité de contrôle d'authentification ;
- la réponse de contrôle est vérifiée par l'unité de contrôle d'authentification.

5. Système d'autorisation dynamique d'un appareil de communication mobile (111) pour un réseau par une unité de contrôle d'authentification du réseau, comportant :
- un module d'authentification (112) associé à l'appareil de communication mobile (111) et pouvant être relié au réseau via une interface de communication (110) protégée physiquement en accès ;
- l'appareil de communication mobile (111) qui peut être relié au réseau via d'autres interfaces de communication (109) sans fil ou filaire ;
- le module d'authentification (112) comportant des moyens de fourniture d'informations de contrôle de sécurité de l'appareil de communication mobile (111) à l'aide desquelles une autorisation de l'appareil de communication mobile (111) est effectuée par l'unité d'authentification du réseau ;
- un accès octroyé à l'appareil de communication mobile (111) étant terminé lorsque le module d'authentification (112) est coupé du réseau ou l'accès n'a pas été utilisé pendant une durée de temps prédéterminable ou une durée de validité prédéterminable de l'accès a expiré ; et
- l'appareil de communication mobile pouvant recevoir de manière répétée un accès octroyé.

6. Système selon la revendication 5, les informations de contrôle de sécurité étant des données de configuration pour l'établissement d'une liaison réseau sécurisée de l'appareil de communication mobile (111).

7. Système selon la revendication 6, les données de configuration pour l'établissement d'une liaison réseau sécurisée comprenant une information d'identification de l'appareil de communication mobile (111) et/ou une information de clé symétrique ou asymétrique.

8. Système selon la revendication 5, les informations de contrôle de sécurité étant une fonctionnalité d'authentification pour l'établissement d'une liaison réseau sécurisée de l'appareil de communication mobile (111), et le module d'authentification (112) et l'unité de contrôle d'authentification étant conçus de manière telle que :
- une commande de contrôle peut être transmise par l'unité de contrôle d'authentification au module d'authentification (112) ;
- une réponse de contrôle peut être déterminée à l'aide de la commande de contrôle par le module d'authentification (112) et la réponse de contrôle peut etre transmise par le module d'authentification (112) à l'unité de contrôle d'authentification ;
- la réponse de contrôle peut être vérifiée par l'unité de contrôle d'authentification.

9. Module d'authentification adapté pour exécuter un procédé selon les revendications 1 à 4.
